# EUROPÄISCHE PATENTSCHRIFT

(11) **EP 2 514 021 B1**
(45) Veröffentlichungstag und Bekanntmachung des Hinweises auf die Patenterteilung: **25.02.2015**
(21) Anmeldenummer: 10796333.2
(22) Anmeldetag: 13.12.2010
(51) Int. Cl.: H01M 10/0567, H01M 10/052

(54) **THIAZOL-VERBINDUNGEN ALS ADDITIVE IN ELEKTROLYTLÖSUNGEN FÜR ELEKTROCHEMISCHEN ZELLEN UND BATTERIEN**
THIAZOLE COMPOUNDS AS ADDITIVES IN ELECTROLYTE SOLUTIONS FOR ELECTROCHEMICAL CELLS AND BATTERIES
COMPOSES THIAZOLE COMME ADDITIFS DANS DES SOLUTIONS ELECTROLYTIQUES POUR CELLULES ELECTROCHIMIQUES ET BATTERIES

(30) Priorität: 15.12.2009 EP 09179174
(43) Veröffentlichungstag der Anmeldung: 24.10.2012
(73) Patentinhaber: BASF SE, 67056 Ludwigshafen (DE)
(72) Erfinder: STEIMLE, Xiao, 88090 Immenstaad (DE); MALKOWSKY, Itamar, Michael, 67346 Speyer (DE); LEITNER, Klaus, 67059 Ludwigshafen (DE)
(86) Internationale Anmeldenummer: PCT/EP2010/069439
(87) Internationale Veröffentlichungsnummer: WO 2011/073113

(56) Entgegenhaltungen:
- EP-A1- 0 684 620
- EP-A1- 1 202 374
- EP-A1- 1 819 005
- EP-A2- 1 148 570
- WO-A2-2010/106072
- CN-A- 1 819 324
- JP-A- 6 349 523
- JP-A- 2001 143 748
- JP-A- 2003 123 837
- US-A1- 2004 025 933

## Beschreibung

Die vorliegende Erfindung betrifft eine Elektrolytlösung, enthaltend wenigstens ein Lösungsmittel als Komponente A, wenigstens einen Elektrolyten als Komponente B und 0,1 bis 20 Gew.-%, bezogen auf die gesamte Elektrolytlösung, wenigstens einer heteroaromatischen Verbindung der allgemeinen Formel (I) als Komponente C, die Verwendung einer solchen Verbindung in Elektrolytlösungen, die Verwendung einer solchen Elektrolytlösung in einer elektrochemischen Zelle oder zur Metallbeschichtung, sowie elektrochemische Zellen, enthaltend eine entsprechende Elektrolytlösung.

Elektrolytlösungen zur Verwendung in elektrochemischen Zellen bzw. in der Metallbeschichtung sind aus dem Stand der Technik bereits bekannt.

Jeong et al., Electrochem. Comm. 10 (2008), 635 bis 638, offenbaren ein Verfahren zu Vermeiden der Bildung dendritischer Lithium-Kristalle in konzentrierten Elektrolytlösungen. Die in diesem Dokument genannten Elektrolytlösungen enthalten entsprechende Lithiumsalze als Elektrolyten. Des Weiteren wird die Abhängigkeit der Bildung entsprechender Kristalle von der Konzentration des Lithium-Salzes LiN(SO₂C₂F₅)₂ untersucht.

Zhang et al., J. of Power sources 162 (2006), 1379 bis 1394, offenbaren verschiedene Additive für Elektrolytlösungen, welche in Lithium-Ionen-Batterien eingesetzt werden können. Als Additive werden organische Verbindungen vorgeschlagen, beispielsweise heterozyklische Verbindungen, Carbonate mit ungesättigten Verbindungen, aromatische Verbindungen mit ungesättigten Substituenten, sowie Phosphor- oder Siliziumenthaltende Moleküle. Als weitere geeignete Verbindungen werden Bor-enthaltende Komplexe von Dicarbonsäuren genannt.

Das Dokument CN 1 819 324 A offenbart eine Elektrolytlösung für Lithium-Sekundärbatterien, enthaltend wenigstens ein Lösungsmittel, ein Elektrolytsalz, sowie ein Additiv. Als Additiv werden die in dem Dokument abgebildeten Benzotriazol-Verbindungen genannt.

JP 2003 123837 A offenbart eine Batterie, enthaltend eine Elektrolytlösung, die als Antioxidationsmittel 4,4'-Thiobis(2-tert-butyl-5-methylphenol) enthält. Gemäß den Formeln 4, 5 und 6 kann der Elektrolyt auch Benzotriazole enthalten.

EP 1 202 374 A1 offenbart eine Lithium-Sekundärbatterie. Diese umfasst als Komponente (a) einen organischen und/oder anorganischen Inhibitor. Gemäß Abschnitt [0025] kann dieser ausgewählt sein aus der Gruppe bestehend aus 1,2,3-Benzotriazol, 4- oder 5-Benzotriazol, Benzimidazol, 2-Benzimidazolethiol, 2-Benzoxazolethiol, 2-Methylbenzothiazol, Endol und 2-Mercaptothiazolin.

JP 6 349 523 A offenbart die Verwendung von Benzotriazolen oder Derivaten davon in Batterie-Elektrolyten, um die Ladezyklen dieser Batterien zu verbessern.

US 2004/025933 offenbart Gel-Elektrolyte für Solarzellen. Diese enthalten verschiedene, teilweise heterozyklische, Verbindungen.

JP 2001 143748 A offenbart eine Elektrolytlösung, enthaltend ein Lithiumsalz und u. a. einen Heterozyklus, der Stickstoff und Sauerstoff in kombinierter Form aufweist und wenigstens ein Fluoratom enthält.

In der EP 1 148 570 A2 wird eine nicht-wässrige Elektrolytlösung, die in einer Sekundärbatterie eingesetzt werden kann, offenbart. Die nicht-wässrige Elektrolytlösung enthält wenigstens eine Verbindung ausgewählt aus der Gruppe der Thiole, Thiophene, Thioanisole, Thiazole, Thioacetate, aromatischen Sulfone und Derivaten davon.

EP 0 684 620 A1 offenbart eine Elektrolytlösung enthaltend das Salz eines Derivates einer N,N,N'-3-fach substituierten Amidin-Verbindung mit einer Carbonsäure, wobei die Amidin-Verbindung beispielsweise 1-Methylimidazol, 1-Methylbenzimidazol, 1,2-Dimethylimidazolin sein kann.

EP 1 819 005 A1 offenbart eine Elektrolytlösung enthaltend eine ionische Flüssigkeit. Die Kationen dieser ionischen Flüssigkeit können u. a. auch auf Imidazol basieren. Gemäß Beispiel 1 wird N-Methylbenzimidazol zugegeben.

Die Elektrolytlösungen des Standes der Technik sind beispielsweise bezüglich der Vermeidung der Bildung von Lithium-Dendriten während der Lade- bzw. Entladezyklen verbesserungsbedürftig. Des Weiteren sollten Elektrolytlösungen bereitgestellt werden, welche ein weites elektrochemisches Fenster aufweisen, und gegenüber hochreaktivem Lithium stabil sind.

Aufgabe der vorliegenden Erfindung ist es demnach, eine Elektrolytlösung bereitzustellen, durch die die Bildung von Lithiumdendriten während der Lade- bzw. Entladezyklen vermieden werden kann. Des Weiteren sollte die Elektrolytlösung vorteilhafte Eigenschaften zur Verwendung in wieder aufladbaren Batterien bzw. in der Metallbeschichtung aufweisen.

Diese Aufgaben werden gelöst durch eine Elektrolytlösung, enthaltend wenigstens ein Lösungsmittel als Komponente A, wenigstens einen Elektrolyten als Komponente B und 0,1 bis 20 Gew.-%, bezogen auf die gesamte Elektrolytlösung, wenigstens eine Verbindung der allgemeinen Formel (I) 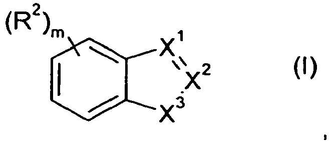 als Komponente C, worin X¹, X², X³, R² und m die folgenden Bedeutungen haben:
- X¹: N,
- X²: CH₂,
- X³: O oder S,
- m: ganze Zahl von 0 bis 4,
wobei mindestens zwei aus X¹, X² und X³ Heteroatome ausgewählt aus N, O und S sind,
- R²: unabhängig voneinander ausgewählt aus der Gruppe bestehend aus lineares oder verzweigtes, substituiertes oder unsubstituiertes, gegebenenfalls von wenigstens einem Heteroatom unterbrochenes, C₁-C₁₂-Alkyl, substituiertes oder unsubstituiertes, gegebenenfalls von wenigstens einem Heteroatom unterbrochenes, C₃-C₁₂-Cycloalkyl, substituiertes oder unsubstituiertes C₅-C₂₀-Aryl, substituiertes oder unsubstituiertes C₅-C₂₀-Heteroaryl, Halogenide und/oder funktionelle Gruppe mit elektronenziehendem Charakter.

Die Aufgaben werden des Weiteren gelöst durch die Verwendung einer Verbindung der allgemeinen Formel (I) in Elektrolytlösungen, von der Verwendung der genannten Elektrolytlösung in einer elektrochemischen Zelle oder zur Metallbeschichtung, sowie von einer elektrochemischen Zelle, enthaltend die erfindungsgemäße Elektrolytlösung.

Die erfindungsgemäße Elektrolytlösung enthält als Komponente A wenigstens ein Lösungsmittel. Das in der erfindungsgemäßen Elektrolytlösung vorliegende wenigstens eine Lösungsmittel ist dem Fachmann an sich bekannt, und bevorzugt ein nicht wässriges Lösungsmittel. In einer besonders bevorzugten Ausführungsform ist Komponente A ein organisches Lösungsmittel.

In einer besonders bevorzugten Ausführungsform ist das wenigstens eine Lösungsmittel ausgewählt aus der Gruppe bestehend aus Carbonaten, Lactonen, heterozyklischen Verbindungen, Estern, Ethern, aromatischen Verbindungen und Mischungen davon.

Erfindungsgemäß besonders bevorzugte Carbonate sind beispielsweise ausgewählt aus der Gruppe bestehend aus Ethylencarbonat, Propylencarbonat, Dimethylcarbonat (DMC), Diethylcarbonat (DEC), Ethylmethylcarbonat (EMC) und Mischungen davon.

Weitere geeignete Lösungsmittel sind Lactone, beispielsweise gamma-Butyrolacton, gamma-Valerolacton und Mischungen davon.

Erfindungsgemäß bevorzugt einsetzbare Ester sind beispielsweise ausgewählt aus aliphatischen Estern von Monocarbonsäuren mit beispielsweise 1 bis 12 Kohlenstoffatomen, insbesondere Essigsäureethylester, Propansäureethylester, Buttersäuremethylester, Buttersäureethylester, Ameisensäuremethylester und Mischungen davon.

Erfindungsgemäß geeignete Ether können linear oder zyklisch sein. Lineare Ether sind beispielsweise ausgewählt aus der Gruppe bestehend aus Dimethylmethylenether (DMM), Dimethylethylenether (DME), Diethylethylenether (DEE) und Mischungen davon. Erfindungsgemäß besonders geeignete zyklische Ether sind beispielsweise ausgesucht aus der Gruppe bestehend aus Tetrahydrofuran (THF), 2-Methyl-Tetrahydrofuran, 1,3-Dioxolan, 4-Methyl-1,3-Dioxolan, 2-Methyl-1,3-Dioxolan und Mischungen davon.

Erfindungsgemäß bevorzugte aromatische Verbindungen sind beispielsweise ausgewählt aus der Gruppe bestehend aus Benzol, Toluol, Chlorbenzol, Xylol und Mischungen davon.

In einer besonders bevorzugten Ausführungsform wird eine Mischung von wenigstens zwei der genannten Verbindungen als Lösungsmittel in der erfindungsgemäßen Elektrolytlösung eingesetzt.

Ganz besonders bevorzugt wird als Komponente A eine Mischung aus wenigstens einem zyklischen Carbonat, beispielsweise Ethylencarbonat, und wenigstens einem linearen Carbonat, beispielsweise Diethylcarbonat, eingesetzt. Das Mischungsverhältnis ist bei den erfindungsgemäß bevorzugt eingesetzten Mischungen von wenigstens zwei der genannten Lösungsmittel breit variierbar. Das Mischungsverhältnis kann beispielsweise 1 : 100 bis 100 : 1, bevorzugt 1 : 20 bis 20 : 1, besonders bevorzugt 1 : 5 bis 5 : 1, betragen.

In der erfindungsgemäßen Elektrolytlösung liegt als Komponente B wenigstens ein Elektrolyt vor.

Erfindungsgemäß sind alle dem Fachmann bekannten Elektrolyte in den erfindungsgemäßen Elektrolytlösungen als Komponente B geeignet.

Insbesondere werden Elektrolyte bevorzugt, die in den genannten Lösungsmitteln eine genügend hohe Löslichkeit aufweisen, um geeignete Elektrolytlösungen zu erhalten. Besonders geeignet sind solche Elektrolyte, welche sich vollständig in dem nicht wässrigen Lösungsmittel der erfindungsgemäßen Elektrolytlösung lösen, und vollständig dissoziieren. Des Weiteren sollten die solvatisierten Ionen mit hoher Mobilität in der Elektrolytlösung beweglich sein. Gerade für die Verwendung der erfindungsgemäßen Elektrolytlösung in elektrochemischen Zellen sollte das korrespondierende Anion des eingesetzten Elektrolyten gegenüber oxidativer Zersetzung an der Kathode stabil sein. Des Weiteren sollte das Anion gegenüber den eingesetzten Lösungsmitteln inert sein. Darüber hinaus sollten beide Teile, der kationische und der anionische Teil des eingesetzten Elektrolyten gegenüber den weiteren Komponenten inert sein.

Bevorzugt wird in der erfindungsgemäßen Elektrolytlösung ein Elektrolyt als Komponente B eingesetzt, dessen Kation Lithium ist. Lithium liegt dabei bevorzugt als Kation in der Oxidationsstufe +I vor.

Das Anion des erfindungsgemäß als Komponente B eingesetzten Elektrolyten wird so ausgewählt, dass die oben genannten Anforderungen erfüllt werden, insbesondere Dissoziationsfähigkeit, Inertheit und Stabilität. Besonders bevorzugte Anionen des Elektrolyten sind beispielsweise ausgewählt aus der Gruppe bestehend aus Halogeniden, beispielsweise Fluorid, Chlorid, Bromid, Iodid, Oxiden, Hydroxiden, anionischen Bor-, Phosphor- und/oder Arsen-Komplexen, Triflaten, Imiden, Perchloraten und Kombination davon.

Besonders bevorzugt wird in der erfindungsgemäßen Elektrolytlösung wenigstens ein Elektrolyt als Komponente B eingesetzt, ausgewählt aus der Gruppe bestehend aus Lithiumhalogeniden, insbesondere Lithiumchlorid LiCl oder Lithiumfluorid LiF, Lithiumoxid Li₂O, Lithiumsalze von Bor-, Phosphor-Arsen-Komplexen, insbesondere Lithiumtetrafluoroborat, Lithiumhexafluorophosphat LiPF₆, Lihtiumhexafluoroarsenat, Lithiumperchlorat, Lithiumtriflat, Lithiumimid, Lithiumbis(trifluoromethansulfonyl)imid und Derivate davon und Mischungen.

Ganz besonders bevorzugt wird in der erfindungsgemäßen Elektrolytlösung Lithiumhexafluorophosphat LiPF₆ als Elektrolyt (Komponente B) eingesetzt.

In der erfindungsgemäßen Elektrolytlösung liegt der wenigstens eine Elektrolyt im Allgemeinen in einer Menge vor, die eine genügend hohe Leitfähigkeit der Elektrolytlösung gewährleistet. Beispielsweise liegt der wenigstens eine Elektrolyt in der erfindungsgemäßen Elektrolytlösung in einer Konzentration von 0,1 bis 10 mol/l, bevorzugt 0,2 bis 2 mol/l, ganz besonders bevorzugt 0,5 bis 1,5 mol/l, vor.

Für die anderen genannten Elektrolyte können die entsprechenden Gewichtsprozente durch den Fachmann berechnet werden.

In der erfindungsgemäßen Elektrolytlösung liegen 0,1 bis 20 Gew.-%, bevorzugt 0,1 bis 5,0 Gew.-%, besonders bevorzugt 1,0 bis 3,0 Gew.-%, jeweils bezogen auf die gesamte Elektrolytlösung, wenigstens einer Verbindung der allgemeinen Formel (I) als Komponente C vor 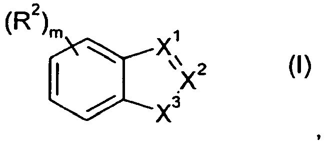 worin X¹, X², X³, R² und m die folgenden Bedeutungen haben:
- X¹: N,
- X²: CH₂,
- X³: O oder S,
- m: ganze Zahl von 0 bis 4,
wobei mindestens zwei aus X¹, X² und X³ Heteroatome ausgewählt aus N, O und S sind,
- R²: unabhängig von einander ausgewählt aus der Gruppe bestehend aus lineares oder verzweigtes, substituiertes oder unsubstituiertes, gegebenenfalls von wenigstens einem Heteroatom unterbrochenes, C₁-C₁₂-Alkyl, substituiertes oder unsubstituiertes, gegebenenfalls von wenigstens einem Heteroatom unterbrochenes, C₃-C₁₂-Cycloalkyl, substituiertes oder unsubstituiertes C₅-C₂₀-Aryl, substituiertes oder unsubstituiertes C₅-C₂₀-Heteroaryl, Halogenide und/oder funktionelle Gruppe mit elektronenziehendem Charakter.

In einer bevorzugten Ausführungsform bedeutet X³ S.

m beschreibt in der allgemeinen Formel (I) die Anzahl der sich am aromatischen Ring befindenden Substituenten R². m bedeutet bevorzugt 0, 1, 2, 3, oder 4, ganz besonders bevorzugt 0, 1 oder 2, insbesondere bevorzugt 0.

In einer bevorzugten Ausführungsform ist R² unabhängig von einander ausgewählt aus der Gruppe bestehend aus lineares oder verzweigtes, substituiertes oder unsubstituiertes, gegebenenfalls von wenigstens einem Heteroatom unterbrochenes C₁-C₁₂-Alkyl, bevorzugt C₁-C₆-Alkyl, besonders bevorzugt C₁-C₃-Alkyl, beispielsweise Methyl, Ethyl, Propyl, substituiertes oder unsubstituiertes C₅-C₂₀-Aryl, beispielsweise Phenyl oder Naphthyl und/oder funktionelle Gruppe mit elektronenziehendem Charakter, beispielsweise ausgewählt aus der Gruppe bestehend aus Halogeniden, beispielsweise Fluorid.

An R² gegebenenfalls vorliegende Substituenten sind erfindungsgemäß unabhängig von einander ausgewählt aus der Gruppe bestehend aus lineares oder verzweigtes, substituiertes oder unsubstituiertes, gegebenenfalls von wenigstens einem Heteroatom unterbrochenes, C₁-C₁₂-Alkyl, substituiertes oder unsubstituiertes, nem Heteroatom unterbrochenes, C₁-C₁₂-Alkyl, substituiertes oder unsubstituiertes, gegebenenfalls von wenigstens einem Heteroatom unterbrochenes, C₃-C₁₂-Cycloalkyl, substituiertes oder unsubstituiertes C₅-C₂₀-Aryl, substituiertes oder unsubstituiertes C₅-C₂₀-Heteroaryl, Halogenide und/oder funktionelle Gruppe, beispielsweise CN, und Mischungen davon.

In einer ganz besonders bevorzugten Ausführungsform haben worin X¹, X², X³ und m die folgenden Bedeutungen:
- X¹: N,
- X²: CH,
- X³: S,
- m: 0,

d. h. insbesondere bevorzugt wird Benzothiazol der Formel (la) als Verbindung der allgemeinen Formel (I) als Komponente C eingesetzt

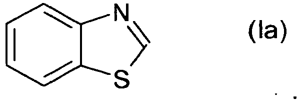

Daher betrifft in einer ganz besonders bevorzugten Ausführungsform die vorliegende Erfindung eine erfindungsgemäße Elektrolytlösung, wobei als Verbindung der allgemeinen Formel (I) Benzothiazol vorliegt.

In der besonders bevorzugten Ausführungsform, dass die erfindungsgemäße Elektrolytlösung ausschließlich aus den Komponenten A, B und C besteht, ergänzen sich die Mengen der Komponenten A, B und C jeweils zu 100 Gew.-%.

In einer ganz besonders bevorzugten Ausführungsform betrifft die vorliegende Erfindung eine Elektrolytlösung, enthaltend eine Mischung aus wenigstens einem zyklischen Carbonat, beispielsweise Ethylencarbonat, und wenigstens einem linearen Carbonat, beispielsweise Diethylcarbonat, als Komponente A, Lithiumhexafluorophosphat LiPF₆ als Komponente B und Benzothiazol als Komponente C, jeweils in den oben angegebenen Mengen.

Die vorliegende Erfindung betrifft auch die Verwendung einer Verbindung der allgemeinen Formel (I) in Elektrolytlösungen. Insbesondere betrifft die vorliegende Erfindung die genannte Verwendung, wobei die Verbindung der allgemeinen Formel (I) in elektrochemischen Zellen eingesetzt wird.

Bezüglich der bevorzugten Ausführungsformen der Verbindung der allgemeinen Formel (I) gilt das oben Gesagte. Besonders bevorzugt wird als Verbindung der allgemeinen Formel (I) Benzothiazol verwendet.

Elektrochemische Zellen, insbesondere ihr Aufbau und die enthaltenen Komponenten, sind dem Fachmann an sich bekannt. Insbesondere bevorzugt wird die Verbindung der allgemeinen Formel (I) in Batterien, insbesondere in wieder aufladbaren Batterien, verwendet. Deren allgemeiner Aufbau ist beispielsweise in "Lithiumion batteries: Science and Technologies, Gholam-Abbas Nazri, Gianfranco Pistoia, 2009", beschrieben. Diese elektrochemischen Zellen enthalten im Allgemeinen neben dem Elektrolyt, wenigstens eine Anode, beispielsweise aus Lithium, eine Kathode, beispielsweise aus Kupfer, Lithium, sowie entsprechende Isolierungen und Anschlüsse.

Des Weiteren betrifft die vorliegende Erfindung die erfindungsgemäße Verwendung, wobei die Verbindung der allgemeinen Formel (I) zur Metallbeschichtung eingesetzt wird.

Verfahren zur Metallbeschichtung sind dem Fachmann an sich bekannt, und beispielsweise beschrieben in "Praktische Galvanotechnik" von P. W. Jelinek, Eugen G. Lenze Verlag, 2005. Unter Verwendung der Verbindung der allgemeinen Formel (I) kann beispielsweise Lithium auf ein entsprechendes Substrat, beispielsweise aus Kupfer aufgebracht werden.

Des Weiteren betrifft die vorliegende Verbindung die Verwendung der erfindungsgemäßen Elektrolytlösung in einer elektrochemischen Zelle oder zur Metallbeschichtung. Bevorzugte Ausführungsformen der erfindungsgemäßen Elektrolytlösung und Details zu elektrochemischen Zellen oder der Metallbeschichtung sind oben genannt.

### Figuren

Figur 1 zeigt ein zyklisches Voltammogram mit 3 Gew.-% Benzothiazol in einem EC/DEC Elektrolyten (Beispiel 1). Auf der y-Achse ist die Stromstärke in mA aufgetragen, auf der x-Achse ist die Spannung in mV aufgetragen.
Figur 2 zeigt die Zyklisierbarkeit einer Li/NCA-Zelle (Beispiel 3). Auf der y-Achse ist die Kapazität in mAh/g aufgetragen, auf der x-Achse ist die Zyklusnummer aufgetragen.

Dabei gilt:

| | |
|---|---|
| durchgezogene Linie: | CC-Elektrolyt ohne Benzothiazol, |
| gestrichelte Linie: | CC-Elektrolyt mit Benzothiazol |
| durchgezogene Linie mit Dreiecken: | DC-Elektrolyt ohne Benzothiazol |
| gestrichelte Linie mit Dreiecken: | DC-Elektrolyt mit Benzothiazol |

CC bedeutet dabei "charging current", d. h. der Strom, der zum Laden der Batterie aufgebracht wird. DC bedeutet "discharging current", d. h. der Strom, der beim Entladen aufgebracht wird.

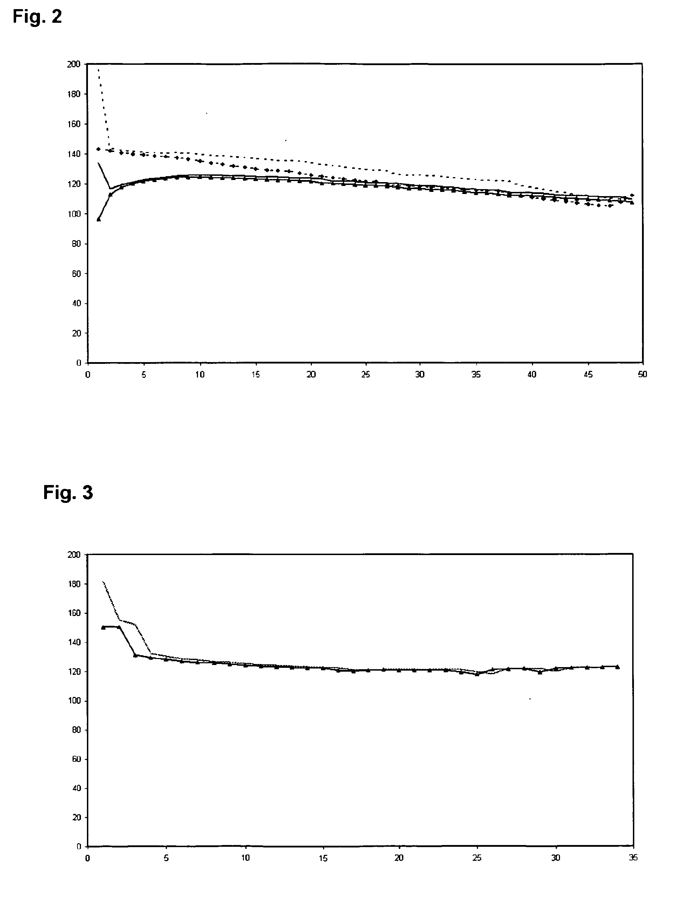

Figur 3 zeigt die Zyklisierbarkeit einer C/NMC-Zelle (Beispiel 4). Auf der y-Achse ist die Kapazität in mAh/g aufgetragen, auf der x-Achse ist die Zyklusnummer aufgetragen.

Dabei gilt:

| | |
|---|---|
| durchgezogene Linie: | CC-Elektrolyt |
| durchgezogene Linie mit Dreiecken: | DC-Elektrolyt |

CC und DC siehe oben.

### Beispiele

### Beispiel 1

Bestimmung des elektrochemischen Fensters, bestimmt durch zyklische Voltametrie (CV)

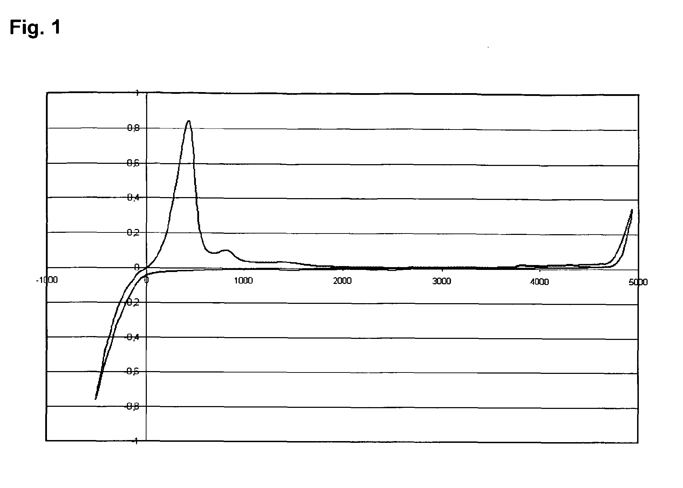

Der Versuch wird in einem Plastik beschichteten Glasgefäß durchgeführt. Die Arbeitselektrode (WE) ist eine Platin-Ringelektrode mit einer Fläche von 0,04 cm², die Referenzelektrode (RE) ist Lithiummetall, welches in der Nähe der Arbeitselektrode angeordnet ist. Die Gegenelektrode (CE) ist eine Lithiumplatte. Die verwendete Elektrolytlösung ist eine Mischung von Ethylencarbonat (EC) und Diethylcarbonat (DEC), mit einem Verhältnis von 1 : 3 (Volumen). 5 Gew.-% Benzothiazol werden zu der genannten Elektrolytlösung gegeben. Der Elektrolyt ist LiPF₆, ein molar in der genannten Lösung. Die angewendete Scanrate ist 20 mV/s im Bereich von -0,5 V bis 5 V gegenüber Li/Li+. In Figur 1 ist das elektrochemische Fenster bei 4,8 V dargestellt.

### Beispiel 2

### Lithium-Beschichtung und Morphologie

Das elektrochemische Lithium-Beschichtungsexperiment wird in einem plastikbeschichteten Glasbehälter durchgeführt. Gegen- und Arbeitselektrode sind Lithiumplatten mit 3,0 cm² Fläche. Lithiummetall wird als Referenzelektrode verwendet. Die Arbeitselektrode wird mit einem konstanten Kathodenstrom von 1 mA/cm² beschickt. Der Elektrolyt aus Ethylencarbonat und Diethylcarbonat (1 : 3 v/v) mit 5 Gew.-% Benzothiazol und ein Kontrollelektrolyt werden unter den gleichen Bedingungen getestet.

Der Kontrollversuch ergibt eine sehr lockere Lithiumabscheidung mit sehr schlechter Haftung auf der Platte. Der Versuch unter Verwendung von Benzothiazol als Additiv gibt eine sehr dichte, feine Ablagerung mit guter Haftung. Die Strom-Effizienz wird zu 98 % berechnet.

### Beispiel 3

### Zellenzyklus

In einer Swagelok 3-Elektrodenzelle wird Lithiumfolie als Anode auf einer Kupferfolie als Stromsammler verwendet. NCA (Li-Ni-Co-Oxid) wird als Kathodenmaterial beschichtet mit einem Aluminiumstromsammler verwendet, als Referenzelektrode wird wiederum Lithium verwendet. Die Zelle wird in einer Glovebox unter Argonatmosphäre zusammengefügt, wobei alle Komponenten über Nacht in einem Vakuumofen bei 120 °C getrocknet worden sind. Die Zelle wird zwischen 3 V und 4,2 V unter 1C zyklisiert. Elektrolyte mit und ohne Benzothiazol werden getestet. Figur 2 zeigt, dass Benzothiazol die Zyklisierbarkeit der Zelle verbessert.

In einem weiteren Test werden NMC (Li-Ni-Mn-Co-Oxid) als Kathodenmaterial und Graphit als Anodenmaterial verwendet. Das Swagelok Setup und die Testbedingungen werden beibehalten. Figur 3 zeigt die stabile Performance in Gegenwart von Benzothiazol, was zeigt, dass Benzothiazol keinen negativen Effekt auf die Graphite-Anode hat.

## Patentansprüche

1. Elektrolytlösung, enthaltend wenigstens ein Lösungsmittel als Komponente A, wenigstens einen Elektrolyten als Komponente B und 0,1 bis 20 Gew.-%, bezogen auf die gesamte Elektrolytlösung, wenigstens eine Verbindung der allgemeinen Formel (I) 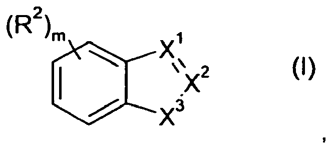 als Komponente C, worin X¹, X², X³, R² und m die folgenden Bedeutungen haben:
X¹ N,
X² CH,
X³ O oder S,
m ganze Zahl von 0 bis 4,
wobei mindestens zwei aus X¹, X² und X³ Heteroatome ausgewählt aus N, O und S sind,
R² unabhängig voneinander ausgewählt aus der Gruppe bestehend aus lineares oder verzweigtes, substituiertes oder unsubstituiertes, gegebenenfalls von wenigstens einem Heteroatom unterbrochenes, C₁-C₁₂-Alkyl, substituiertes oder unsubstituiertes, gegebenenfalls von wenigstens einem Heteroatom unterbrochenes, C₃-C₁₂-Cycloalkyl, substituiertes oder unsubstituiertes C₅-C₂₀-Aryl, substituiertes oder unsubstituiertes C₅-C₂₀-Heteroaryl, Halogenide und/oder funktionelle Gruppe mit elektronenziehendem Charakter.

2. Elektrolytlösung nach Anspruch 1, **dadurch gekennzeichnet, dass** das Lösungsmittel (Komponente A) ausgewählt ist aus der Gruppe bestehend aus Carbonaten, heterozyklischen Verbindungen, Estern, Ethern, aromatischen Verbindungen und Mischungen davon.

3. Elektrolytlösung nach Anspruch 1 oder 2, **dadurch gekennzeichnet, dass** der wenigstens eine Elektrolyt (Komponente B) ausgewählt ist aus der Gruppe bestehend aus Lithiumhalogeniden, Lithiumoxid, Lithiumsalzen von Bor-, Phosphor-Arsen-Komplexen, Lithiumperchlorat, Lithiumtriflat, Lithiumimid, Lithiumbis(trifluoromethansulfonyl)imid, Derivate davon und Mischungen davon.

4. Elektrolytlösung nach einem der Ansprüche 1 bis 3, **dadurch gekennzeichnet, dass** als Verbindung der allgemeinen Formel (I) Benzothiazol vorliegt.

5. Verwendung einer Verbindung der allgemeinen Formel (I) wie in Anspruch 1 definiert in Elektrolytlösungen.

6. Verwendung nach Anspruch 5, **dadurch gekennzeichnet, dass** die Elektrolytlösung in elektrochemischen Zellen eingesetzt wird.

7. Verwendung nach Anspruch 5, **dadurch gekennzeichnet, dass** die Elektrolytlösung zur Metallbeschichtung eingesetzt wird.

8. Verwendung einer Elektrolytlösung gemäß einem der Ansprüche 1 bis 4 in einer elektrochemischen Zelle oder zur Metallbeschichtung.

## Claims

1. An electrolyte solution comprising at least one solvent as component A, at least one electrolyte as component B and from 0.1 to 20% by weight, based on the total electrolyte solution, of at least one compound of the general formula (I), 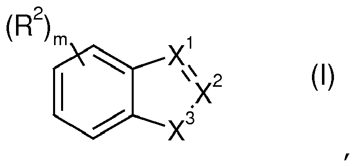 as component C, where X¹, X², X³, R² and m have the following meanings:
X¹ is N,
X² is CH,
X³ is 0 or S,
m is an integer from 0 to 4,
where at least two of X¹, X² and X³ are heteroatoms selected from among N, 0 and S,
the radicals R² are selected independently from the group consisting of linear or branched, substituted or unsubstituted C₁-C₁₂-alkyl optionally interrupted by at least one heteroatom, substituted or unsubstituted C₃-C₁₂-cycloalkyl optionally interrupted by at least one heteroatom, substituted or unsubstituted C₅-C₂₀-aryl, substituted or unsubstituted C₅-C₂₀-heteroaryl, halides and functional groups having electron-pulling character.

2. The electrolyte solution according to claim 1, wherein the solvent (component A) is selected from the group consisting of carbonates, heterocyclic compounds, esters, ethers, aromatic compounds and mixtures thereof.

3. The electrolyte solution according to claim 1 or 2, wherein the at least one electrolyte (component B) is selected from the group consisting of lithium halides, lithium oxide, lithium salts of boron, phosphorus, arsenic complexes, lithium perchlorate, lithium triflate, lithium imide, lithium bis(trifluoromethanesulfonyl)imide, derivatives thereof and mixtures thereof.

4. The electrolyte solution according to any of claims 1 to 3, wherein benzothiazole is present as compound of the general formula (I).

5. The use of a compound of the general formula (I) as defined in claim 1 in electrolyte solutions.

6. The use according to claim 5, wherein the electrolyte solution is used in electrochemical cells.

7. The use according to claim 5, wherein the electrolyte solution is used for metal plating.

8. The use of an electrolyte solution according to any of claims 1 to 4 in an electrochemical cell or for metal plating.

## Revendications

1. Solution électrolytique, contenant au moins un solvant en tant que composant A, au moins un électrolyte en tant que composant B et 0,1 à 20 % en poids, par rapport à l'ensemble de la solution électrolytique, d'au moins un composé de formule générale (I) 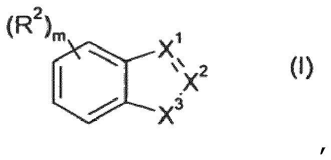 en tant que composant C, dans laquelle X¹, X¹, X³, R² et m ont les significations suivantes :
X¹ N,
X² CH,
X³ O ou S,
m nombre entier de 0 à 4,
au moins deux radicaux parmi X¹, X² et X³ étant des hétéroatomes choisis parmi N, 0 et S,
R² choisis indépendamment les uns des autres dans le groupe constitué par alkyle en C₁-C₁₂ linéaire ou ramifié, substitué ou non substitué, éventuellement interrompu par au moins un hétéroatome, cycloalkyle en C₃-C₁₂ substitué ou non substitué, éventuellement interrompu par au moins un hétéroatome, aryle en C₅-C₂₀ substitué ou non substitué, hétéroaryle en C₅-C₂₀ substitué ou non substitué, halogénures et/ou groupe fonctionnel à caractère attracteur d'électrons.

2. Solution électrolytique selon la revendication 1, **caractérisée en ce que** le solvant (composant A) est choisi dans le groupe constitué par les carbonates, les composés hétérocycliques, les esters, les éthers, les composés aromatiques et leurs mélanges.

3. Solution électrolytique selon la revendication 1 ou 2, **caractérisée en ce que** le ou les électrolytes (composant B) sont choisis dans le groupe constitué par les halogénures de lithium, l'oxyde de lithium, les sels de lithium de complexes de bore, de phosphore, d'arsenic, le perchlorate de lithium, le triflate de lithium, l'imide de lithium, le bis(trifluorométhanesulfonyl)imide de lithium, leurs dérivés et leurs mélanges.

4. Solution électrolytique selon l'une quelconque des revendications 1 à 3, **caractérisée en ce que** le benzothiazole est présent en tant que composé de formule générale (I).

5. Utilisation d'un composé de formule générale (I) tel que défini dans la revendication 1 dans des solutions électrolytiques.

6. Utilisation selon la revendication 5, **caractérisée en ce que** la solution électrolytique est utilisée dans des cellules électrochimiques.

7. Utilisation selon la revendication 5, **caractérisée en ce que** la solution électrolytique est utilisée pour le revêtement de métaux.

8. Utilisation d'une solution électrolytique selon l'une quelconque des revendications 1 à 4 dans une cellule électrochimique ou pour le revêtement de métaux.
